(19) Europäisches Patentamt / European Patent Office / Office européen des brevets

(11) **EP 4 131 469 A1**

(12) **EUROPEAN PATENT APPLICATION**
published in accordance with Art. 153(4) EPC

(43) Date of publication:
**08.02.2023 Bulletin 2023/06**

(21) Application number: **21776658.3**

(22) Date of filing: **18.03.2021**

(51) International Patent Classification (IPC):
$H01M\ 4/131$ (2010.01)    $H01M\ 4/505$ (2010.01)
$H01M\ 4/525$ (2010.01)    $H01M\ 4/587$ (2010.01)
$H01M\ 4/62$ (1974.07)    $H01M\ 10/052$ (2010.01)
$H01M\ 10/0567$ (2010.01)    $H01M\ 10/0569$ (2010.01)

(52) Cooperative Patent Classification (CPC):
H01M 4/131; H01M 4/505; H01M 4/525;
H01M 4/587; H01M 4/62; H01M 10/052;
H01M 10/0567; H01M 10/0569; Y02E 60/10

(86) International application number:
**PCT/JP2021/011260**

(87) International publication number:
**WO 2021/193388 (30.09.2021 Gazette 2021/39)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.03.2020 JP 2020054998**

(71) Applicant: **Mitsui Chemicals, Inc.
Tokyo 105-7122 (JP)**

(72) Inventors:
- **SUGAWARA, Kei**
  **Sodegaura-shi, Chiba 299-0265 (JP)**
- **NOGI, Hidenobu**
  **Sodegaura-shi, Chiba 299-0265 (JP)**
- **NAGAKAWA, Keita**
  **Sodegaura-shi, Chiba 299-0265 (JP)**

(74) Representative: **J A Kemp LLP
80 Turnmill Street
London EC1M 5QU (GB)**

(54) **LITHIUM SECONDARY BATTERY**

(57)    A lithium secondary battery includes: a positive electrode that includes a positive electrode active material including a compound represented by the following Formula (X) and a binder including a polyvinylidene fluoride having a weight average molecular weight of from 300,000 to 950,000; a negative electrode; and a non-aqueous electrolytic solution that includes at least one of lithium difluorophosphate or lithium monofluorophosphate. In Formula (X), each of a, b, and c is independently more than 0 but less than 1.00, and the sum of a, b, and c is from 0.99 to 1.00. $LiNi_aMn_bCo_cO_2$ ••• (X)

EP 4 131 469 A1

**Description**

Technical Field

The present disclosure relates to a lithium secondary battery.

Background Art

Various studies have been made with respect to a non-aqueous electrolytic solution for a battery, which is used in a battery such as a lithium secondary battery.

For example, Patent Document 1 discloses, as a non-aqueous electrolyte battery achieving low electric resistance as well as suppression of gas generation, a non-aqueous electrolyte battery comprising: a positive electrode; a negative electrode containing monoclinic titanium dioxide or $Li_{4+a}Ti_5O_{12}$ ($-0.5 \leq a \leq 3$) as an active material, and polyvinylidene fluoride with a molecular weight of 400,000 to 1,000,000 as a binder, the negative electrode satisfying a formula (I) below; and a nonaqueous electrolyte containing at least one of difluorophosphate or monofluorophosphate,

$$0.1 \leq (P2/P1) \leq 0.4 \quad (I)$$

wherein P1 is an intensity of a peak that appears within a range of 689 to 685 eV in a spectrum according to photoelectron spectrometry of a surface of the negative electrode, and P2 is an intensity of a peak that appears within a range of 684 to 680 eV in the spectrum.

Patent Document 1: International Publication (WO) No. 2017/154908

SUMMARY OF INVENTION

Problem to be Solved by Invention

However, there are cases in which further reduction of cell resistance after storage is requested. An object of one aspect of the present disclosure is to provide a lithium secondary battery in which cell resistance after storage is reduced.

Means for Solving the Problem

Means for solving the foregoing problem include the following aspects.

<1> A lithium secondary battery, including: a positive electrode that includes a positive electrode active material including a compound represented by the following Formula (X) and a binder including a polyvinylidene fluoride having a weight average molecular weight of from 300,000 to 950,000; a negative electrode; and a non-aqueous electrolytic solution that includes at least one of lithium difluorophosphate or lithium monofluorophosphate:

$$LiNi_aMn_bCo_cO_2 \bullet\bullet\bullet \quad (X)$$

wherein, in Formula (X), each of a, b, and c is independently more than 0 but less than 1.00, and the sum of a, b, and c is from 0.99 to 1.00.

<2> The lithium secondary battery according to <1>, wherein the total content of the lithium difluorophosphate and the lithium monofluorophosphate is from 0.01% by mass to 5% by mass with respect to the total amount of the non-aqueous electrolytic solution.

<3> The lithium secondary battery according to <1> or <2>, wherein the positive electrode includes a positive electrode current collector and a positive electrode mix layer that includes the positive electrode active material and the binder, and the content of the polyvinylidene fluoride is from 0.01% by mass to 10% by mass with respect to the total amount of the positive electrode mix layer.

<4> The lithium secondary battery according to any one of <1> to <3>, wherein the negative electrode includes a negative electrode active material that includes a graphite material.

<5> The lithium secondary battery according to any one of <1> to <4>, wherein the non-aqueous electrolytic solution includes: a non-aqueous solvent that includes ethylene carbonate (EC), dimethyl carbonate (DMC), and ethyl methyl carbonate (EMC); and an electrolyte that includes a fluorine-containing lithium salt.

<6> The lithium secondary battery according to <5>, wherein the charged voltage at full charge is 3.5V or more.

Advantageous Effect of Invention

According to an aspect of the present disclosure, a lithium secondary battery is provided in which cell resistance after storage is reduced.

BRIEF DESCRIPTION OF THE DRAWINGS

Fig. 1 is a schematic perspective view illustrating one example of a laminate cell, which is one example of a lithium secondary battery according to the present disclosure.
Fig. 2 is a schematic cross-sectional view, in the thickness direction, of an electrode stack body housed in the laminate cell illustrated in Fig. 1.
Fig. 3 is a schematic cross-sectional view illustrating one example of a coin cell, which is another example of a lithium secondary battery according to the present disclosure.

MODES FOR CARRYING OUT THE INVENTION

In the present specification, any numerical range expressed using "to" means a range including numerical values described before and after "to" as a lower limit value and an upper limit value.
In the present specification, in a case in which plural substances corresponding to a component of interest are present in a composition, the amount of the component in the composition means the total amount of the plural substances present in the composition, unless otherwise specified.

[Lithium Secondary Battery]

The lithium secondary battery according to the present disclosure includes: a positive electrode that includes a positive electrode active material including a compound represented by the following Formula (X) and a binder including a polyvinylidene fluoride having a weight average molecular weight of from 300,000 to 950,000; a negative electrode; and a non-aqueous electrolytic solution that includes at least one of lithium difluorophosphate or lithium monofluoro-phosphate.

$$LiNi_aMn_bCo_cO_2 \cdots \qquad (X)$$

In Formula (X), each of a, b, and c is independently more than 0 but less than 1.00, and the sum of a, b, and c is from 0.99 to 1.00.

<Positive Electrode>

The positive electrode includes a positive electrode active material including a compound represented by the above-described Formula (X) (hereinafter also referred to as a "compound (X)") and a binder including a polyvinylidene fluoride having a weight average molecular weight of from 300,000 to 950,000. The positive electrode is capable of accepting and releasing lithium ions. The positive electrode preferably includes a positive electrode current collector and a positive electrode mix layer that includes the positive electrode active material and the binder. The positive electrode mix layer is provided on at least a part of a surface of the positive electrode current collector.

(Positive Electrode Active Material)

The positive electrode in the lithium secondary battery according to the present disclosure includes the compound (X). Specific examples of the compound (X) include $LiNi_{0.33}Mn_{0.33}Co_{0.33}O_2$, $LiNi_{0.5}Mn_{0.3}Co_{0.2}O_2$, $LiNi_{0.6}Mn_{0.2}Co_{0.2}O_2$, $LiNi_{0.8}Mn_{0.1}Co_{0.1}O_2$, and the like.
In Formula (X), preferably, a is more than 0.4 but less than 1, b is more than 0 but less than 0.6, c is more than 0 but less than 0.6, and the sum of a, b, and c is 1.
In Formula (X), a is more preferably from 0.42 to 0.90, still more preferably from 0.45 to 0.90, and further more preferably from 0.48 to 0.90.
In Formula (X), b is more preferably from 0.08 to 0.55, still more preferably from 0.10 to 0.50, and further more preferably from 0.10 to 0.40.
In Formula (X), c is more preferably from 0.08 to 0.55, still more preferably from 0.10 to 0.50, and further more preferably from 0.10 to 0.30.

$LiNi_{0.5}Mn_{0.3}Co_{0.2}O_2$, $LiNi_{0.6}Mn_{0.2}Co_{0.2}O_2$, or $LiNi_{0.8}Mn_{0.1}Co_{0.1}O_2$ is preferable as a compound (X).

The positive electrode active material may include a lithium-containing complex oxide represented by the following Formula (Y) (hereinafter also referred to as "NCA"):

$$Li_tNi_{1-x-y}Co_xAl_yO_2 \quad \cdots \qquad \text{Formula (Y)}$$

In Formula (Y), t is from 0.95 to 1.15, x is from 0 to 0.3, y is from 0.1 to 0.2, and the sum of x and y is less than 0.5.

Specific examples of the NCA include $LiNi_{0.8}Co_{0.15}Al_{0.05}O_2$ and the like.

The positive electrode active material may be used singly, or in mixture of two or more thereof. When the electric conductivity of the positive electrode active material is insufficient, the positive electrode active material may be used together with a conductive aid to configure a positive electrode. Examples of the conductive aid include carbon materials such as carbon black, amorphous whiskers, and graphite.

(Binder)

The positive electrode in the lithium secondary battery according to the present disclosure includes a binder including a polyvinylidene fluoride (hereinafter also referred to as "PVDF") having a weight average molecular weight of from 300,000 to 950,000. This configuration enables reduction of cell resistance after storage.

The weight average molecular weight of the PVDF is preferably from 350,000 to 900,000, and more preferably from 420,000 to 850,000, from the viewpoint of further reducing the cell resistance after storage.

The positive electrode may further include other binders than the polyvinylidene fluoride (PVDF), and examples of other binders include polyvinyl acetate, polymethyl methacrylate, nitrocellulose, fluororesins (except for PVDF), rubber particles, and the like.

Examples of the fluororesins include polytetrafluoroethylene (PTFE), tetrafluoroethylene-hexafluoropropylene copolymers (FEP), and vinylidene fluoride-hexafluoropropylene copolymers.

Examples of the rubber particles include styrene-butadiene rubber particles and acrylonitrile rubber particles.

The binder may be used singly, or in combination of two or more thereof, if necessary.

The content of the polyvinylidene fluoride having a weight average molecular weight of from 300,000 to 950,000 in the binder is preferably 90% by mass or more, more preferably 95% by mass or more, still more preferably 98% by mass or more, and particularly preferably 100% by mass, with respect to the total binder amount.

(Positive Electrode Current Collector)

The positive electrode current collector to be used may be selected from various positive electrode current collectors, and, for example, a metal or an alloy is used.

Examples of the positive electrode current collector more specifically include aluminum, nickel, and SUS. Among them, aluminum is preferable from the viewpoint of the balance of the degree of conductivity and the cost. Here, the aluminum refers to pure aluminum or an aluminum alloy.

The positive electrode current collector is particularly preferably an aluminum foil. The aluminum foil is not particularly limited, and examples thereof include A1085 material and A3003 material.

When the positive electrode of the lithium secondary battery according to the present disclosure includes a positive electrode current collector and a positive electrode mix layer that includes a positive electrode active material and a binder, the content of the the polyvinylidene fluoride having a weight average molecular weight of from 300,000 to 950,000 with respect to the total amount of the positive electrode mix layer is preferably from 0.01% by mass to 10% by mass, more preferably from 0.1% by mass to 9% by mass, still more preferably from 1% by mass to 8% by mass, further more preferably from 1% by mass to 7% by mass, and particularly preferably from 2% by mass to 5% by mass.

The content of the positive electrode active material in the positive electrode mix layer is, for example, 10% by mass or more, preferably 30% by mass or more, still more preferably 50% by mass or more, and particularly preferably 70% by mass or more, with respect to the total amount of the positive electrode mix layer.

The content of the positive electrode active material in the positive electrode mix layer is, for example, at most 99.9% by mass, and preferably at most 99% by mass.

(Conductive Aid)

When the positive electrode includes a positive electrode current collector and a positive electrode mix layer, the positive electrode mix layer preferably includes a conductive aid. The conductive aid to be used may be selected from known conductive aids.

The conductive aid to be used may be selected from known conductive aids. With resect to the known conductive aids, there are no particular restrictions as far as they are carbon materials having electric conductivity. Graphite, carbon black, an electrically conductive carbon fiber (carbon nanotube, carbon nanofiber, carbon fiber), fullerene, or the like may be used singly, or in combination of two or more thereof.

Examples of commercially available carbon black include TOKABLACK#4300, #4400, #4500, #5500, etc. (manufactured by Tokai Carbon Co., Ltd.; furnace black), PRINTEX L, etc. (manufactured by Degussa; furnace black), Raven7000, 5750, 5250, 5000ULTRAIII, 5000ULTRA, etc., CONDUCTEX SC ULTRA, CONDUCTEX 975ULTRA, etc., PUER BLACK100, 115, 205, etc. (manufactured by Colombian Chemicals Company; furnace black), #2350, #2400B, #2600B, #30050B, #3030B, #3230B, #3350B, #3400B, #5400B, etc. (manufactured by Mitsubishi Chemical Corporation; furnace black), MONARCH1400, 1300, 900, VULCANXC-72R, BLACKPEARLS2000, LITX-50, LITX-200, etc. (manufactured by Cabot Corporation; furnace black), ENSACO250G, ENSACO260G, ENSACO350G, SUPER-P (manufactured by TIMCAL Ltd.), KETJENBLACK EC-300J, EC-600JD (manufactured by Akzo Nobel), DENKA BLACK, DENKA BLACK HS-100, FX-35 (manufactured by Denka Co., Ltd.; acetylene black), and the like.

Examples of graphite include, but are not limited to, artificial graphite, natural graphite (for example, flaky graphite, bulky graphite and earthy graphite), and the like.

(Other Components)

When the positive electrode includes a positive electrode current collector and a positive electrode mix layer, the positive electrode mix layer may include other components, in addition to the foregoing components. Examples of the other components include thickening agents, surfactants, dispersants, wetting agents, and antifoam agents,

(Method of Forming Positive Electrode Mix Layer)

The positive electrode mix layer can be formed, for example, by applying a positive electrode mix slurry including the positive electrode active material and the binder to a surface of a positive electrode current collector, and drying the positive electrode mix slurry. An organic solvent such as N-methyl-2-pyrrolidone (NMP) is preferable as a solvent contained in the positive electrode mix slurry.

When applying the positive electrode mix slurry onto the positive electrode current collector and drying the positive electrode mix slurry, the method used for the applying and the method used for the drying are not particularly limited. Examples of the method used for the applying include slot die coating, slide coating, curtain coating, gravure coating, and the like. Examples of the method used for the drying include drying by means of warm air, hot air, or low-humidity air; vacuum drying; and drying by means of irradiation with infrared rays (for example, far-infrared rays).

The drying time and the drying temperature are not particularly limited. The drying time is, for example, from 1 minute to 30 minutes, and the drying temperature is, for example, from 40°C to 80°C.

The method of producing the positive electrode mix layer preferably includes a step of reducing the void ratio of the positive electrode active material layer by means of a pressure-application treatment using, for example, die press or roll press, after the application of the positive electrode mix slurry onto a positive electrode current collector and drying.

<Negative Electrode>

The negative electrode in the lithium secondary battery according to the present disclosure is capable of accepting and releasing lithium ions. The negative electrode preferably includes at least one negative electrode active material capable of accepting and releasing lithium ions.

The negative electrode more preferably includes a negative electrode current collector and a negative electrode mix layer that includes a negative electrode active material and a binder. The negative electrode mix layer is provided on at least a part of a surface of the negative electrode current collector.

(Negative Electrode Active Material)

The negative electrode active material is not particularly limited as long as it is a substance capable of accepting and releasing lithium ions. At least one selected from the group consisting of metallic lithium, a lithium-containing alloy, a metal or alloy that can be alloyed with lithium, an oxide capable of doping or de-doping with a lithium ion, a transition metal nitride capable of doping or de-doping with a lithium ion, and a carbon material capable of doping or de-doping with a lithium ion (which may be used singly or may be used in a mixture of two or more thereof) can be used as the negative electrode active material.

The negative electrode active material is preferably a negative electrode active material that can further increase the charged voltage (i.e., the electric potential difference calculated by subtracting the negative electrode electric potential from the positive electrode electric potential) at full charge of the cell (for example, to a voltage of 3.5V or higher).

In a case in which the charged voltage at full charge of the cell is high (for example, 3.5V or higher), an effect produced by specifying the weight average molecular weight of the polyvinylidene fluoride in the positive electrode to a weight average molecular weight of from 300,000 to 950,000 (i.e., an effect in terms of reducing the cell resistance after storage) is more effectively produced.

With respect to preferable ranges for the charged voltage at full charge of the cell, one may refer to the after-mentioned preferable ranges for the charged voltage at full charge of the lithium secondary battery according to the present disclosure.

A carbon material capable of doping or de-doping with a lithium ion is preferable as the negative electrode active material, from the viewpoint of further increasing the charged voltage at full charge of the cell (to, for example, 3.5V or higher). Examples of the carbon material include carbon black, activated carbon, graphite material (for example, artificial graphite, natural graphite), and amorphous carbon materials.

The form of the carbon material may be any of fibrous, spheroidal, potato-shaped, or flake-shaped. The particle diameter of the carbon material is not particularly limited, and is, for example, from 5 $\mu$m to 50 $\mu$m, more preferably from 20 $\mu$m to 30 $\mu$m.

Specific examples of the amorphous carbon materials include hard carbon, coke, mesocarbon microbeads (MCMB) fired at 1500°C or lower, and meso-phase pitch carbon fiber (MCF).

The negative electrode preferably includes a negative electrode active material that includes a graphite material. In a case in which the negative electrode includes a negative electrode active material that includes a graphite material, the charged voltage at full charge of the battery can further be increased (to, for example, 3.5V or higher). Examples of the graphite material include natural graphite and artificial graphite. Graphitized MCMB, graphitized MCF and the like may be used as artificial graphite. A boron-containing graphite material or the like can also be used as a graphite material.

A graphite material coated with a metal such as gold, platinum, silver, copper, or tin, a graphite material coated with amorphous carbon, or a graphite material formed of a mixture of amorphous carbon and graphite, may be used as a graphite material.

These carbon materials may be used singly, or in mixture of two or more thereof.

(Conductive Aid)

When the negative electrode includes a negative electrode current collector and a negative electrode mix layer, the negative electrode mix layer preferably includes a conductive aid. Known conductive aids can be used as the conductive aid.

Specific examples of a conductive aid that can be contained in the negative electrode mix layer are the same as the above-described specific examples of a conductive aid that can be contained in the positive electrode mix layer.

(Other Components)

When the negative electrode includes a negative electrode current collector and a negative electrode mix layer, the negative electrode mix layer may include other components, in addition to the above-described components. Examples of the other components include thickening agents, surfactants, dispersants, wetting agents, and antifoam agents.

(Method of Forming Negative Electrode Mix Layer)

The negative electrode mix layer can be formed, for example, by applying a negative electrode mix slurry including the negative electrode active material and the binder to a surface of a negative electrode current collector, and drying the negative electrode mix slurry. It is preferable to use water as a solvent contained in the negative electrode mix slurry. However, a liquid medium miscible with water may be used, if necessary, in order to, for example, improving coatability onto the current collector.

Examples of the liquid medium miscible with water include alcohols, glycols, cellosolves, aminoalcohols, amines, ketones, carboxylic amides, phosphoric amides, sulfoxides, carboxylic esters, phosphoric esters, ethers, and nitriles. These can be used in a range in which the liquid medium is miscible with water.

Preferable embodiments of the method of forming a negative electrode mix layer are the same as the above-described preferable embodiments of the method of forming a positive electrode mix layer.

<Separator>

An example of a separator in the lithium secondary battery according to the present disclosure is a porous flat plate that includes a resin such as polyethylene (PE), polypropylene (PP), polyester, cellulose, or polyamide. Another example of the separator is a non-woven fabric that includes the resin.

Suitable examples thereof include a porous resin sheet having a monolayer or multilayer structure and formed mainly from one polyolefin resin or from two or more polyolefin resins.

The thickness of the separator may be set to, for example, from 5 $\mu$m to 30 $\mu$m. The separator is preferably disposed between the positive electrode and the negative electrode.

<Non-aqueous Electrolytic Solution>

The non-aqueous electrolytic solution in the lithium secondary battery according to the present disclosure includes at least one of lithium difluorophosphate (LiPO$_2$F$_2$, also referred to as "LiDFP") or lithium monofluorophosphate (Li$_2$PO$_3$F). The non-aqueous electrolytic solution preferably includes: a non-aqueous solvent that includes ethylene carbonate (EC), dimethyl carbonate (DMC), and methyl ethyl carbonate (EMC); and an electrolyte that includes a fluorine-containing lithium salt.

Cell resistance after storage is reduced according to the combination of the non-aqueous electrolytic solution and the above-described positive electrode in the lithium secondary battery according to the present disclosure. The reason that such an effect is produced is not clear, but we surmise that the reason is as follows.

The positive electrode in the lithium secondary battery according to the present disclosure includes, as a binder, a polyvinylidene fluoride having a weight average molecular weight of from 300,000 to 950,000. It is conceivable that the inclusion of a polyvinylidene fluoride having a weight average molecular weight in this specified range provides an appropriate distance/spacing between positive electrode active material molecules in the positive electrode, the distance being at a degree at which diffusibility of lithium ions and electrons is unlikely to be inhibited. It is conceivable that ensuring of the appropriate spacing between positive electrode active material molecules improves the liquid migration of the non-aqueous electrolytic solution, which facilitates stable supply of the at least one of lithium difluorophosphate or lithium monofluorophosphate contained in the non-aqueous electrolytic solution onto a surface of the positive electrode active material molecules, and that an increase in the positive electrode resistance during storage is thereby curbed, resulting in a reduction of cell resistance after storage.

The total content of the lithium difluorophosphate and the lithium monofluorophosphate with respect to the total amount of the non-aqueous electrolytic solution is not particularly limited, and is preferably from 0.01% by mass to 5% by mass from the viewpoint of reduction of cell resistance after storage.

When the total content of the lithium difluorophosphate and the lithium monofluorophosphate is at least 0.1% by mass with respect to the total amount of the non-aqueous electrolytic solution. the effect exerted by the non-aqueous electrolytic solution according to the present disclosure is more effectively exerted. The total content of the lithium difluorophosphate and the lithium monofluorophosphate is more preferably at least 0.2% by mass, still more preferably at least 0.3% by mass, and further more preferably at least 0.5% by mass, with respect to the total amount of the non-aqueous electrolytic solution.

When the total content of the lithium difluorophosphate and the lithium monofluorophosphate is at most 5.0% by mass with respect to the total amount of the non-aqueous electrolytic solution, the chemical stability of the non-aqueous electrolytic solution further improves. The total content of the lithium difluorophosphate and the lithium monofluorophosphate is more preferably at most 3.0% by mass, still more preferably at most 2.0% by mass, and further more preferably at most 1.0% by mass, with respect to the total amount of the non-aqueous electrolytic solution.

The non-aqueous electrolytic solution in the lithium secondary battery according to the present disclosure may include at least one of lithium difluorophosphate or lithium monofluorophosphate, either as an additive for a battery or a as a source of supply of an electrolyte.

When the non-aqueous electrolytic solution in the lithium secondary battery according to the present disclosure includes at least one of lithium difluorophosphate or lithium monofluorophosphate as a source of supply of an electrolyte, the concentration of electrolyte is preferably from 0.1 mol/L to 3 mol/L, and more preferably from 0.5 mol/L to 2 mol/L.

There are cases in which analysis of a non-aqueous electrolytic solution collected by actually disassembling the cell reveals a decrease in the amount of at least one of lithium difluorophosphate or lithium monofluorophosphate as compared to the amount thereof added to the non-aqueous electrolytic solution. In view of this, in a case in which at least one of lithium difluorophosphate or lithium monofluorophosphate is detected, even in a small amount, in a non-aqueous electrolytic solution taken out of a cell, the non-aqueous electrolytic solution shall be included in the scope of the non-aqueous electrolytic solution in the lithium secondary battery according to the present disclosure.

Further, in a case in which a compound derived from a decomposition product of at least one of lithium difluorophosphate or lithium monofluorophosphate is detected in a non-aqueous electrolytic solution or a coating film of an electrode, the non-aqueous electrolytic solution shall also be included in the scope of the non-aqueous electrolytic solution in the lithium secondary battery according to the present disclosure, even if the presence of at least one of lithium difluorophosphate or lithium monofluorophosphate is not detected in the non-aqueous electrolytic solution.

These interpretations will also apply to compounds, other than the at least one of lithium difluorophosphate or lithium monofluorophosphate, which can be included in the non-aqueous electrolytic solution.

<Non-aqueous Solvent>

The non-aqueous electrolytic solution in the lithium secondary battery according to the present disclosure preferably includes at least one non-aqueous solvent.

Examples of the non-aqueous solvent include cyclic carbonates, fluorine-containing cyclic carbonates, chain carbonates, fluorine-containing chain carbonates, aliphatic carboxylic acid esters, fluorine-containing aliphatic carboxylic acid esters, $\gamma$-lactones, fluorine-containing $\gamma$-lactones, cyclic ethers, fluorine-containing cyclic ethers, chain ethers, fluorine-containing chain ethers, nitriles, amides, lactams, nitromethane, nitroethane, sulfolane, trimethyl phosphate, dimethylsulfoxide, dimethylsulfoxide phosphate, and the like.

Examples of cyclic carbonates include ethylene carbonate (EC), propylene carbonate (PC), butylene carbonate (BC), and the like.

Examples of fluorine-containing cyclic carbonates include fluoroethylene carbonate (FEC) and the like.

Examples of chain carbonates include dimethyl carbonate (DMC), diethyl carbonate (DEC), ethyl methyl carbonate (EMC), methyl propyl carbonate (MPC), ethyl propyl carbonate (EPC), dipropyl carbonate (DPC), and the like.

Examples of aliphatic carboxylic acid esters include methyl formate, methyl acetate, methyl propionate, methyl butyrate, methyl isobutyrate, methyl trimethylbutyrate, ethyl formate, ethyl acetate, ethyl propionate, ethyl butyrate, ethyl isobutyrate, ethyl trimethylbutyrate, and the like.

Examples of $\gamma$-lactones include $\gamma$-butyrolactone, $\gamma$-valerolactone, and the like.

Examples of cyclic ethers include tetrahydrofuran, 2-methyl tetrahydrofuran, tetrahydropyrane, 1,3-dioxolane, 4-methyl-1,3-dioxolane, 1,3-dioxane, 1,4-dioxane, and the like.

Examples of chain ethers include 1,2-ethoxyethane (DEE), ethoxymethoxyethane (EME), diethyl ether, 1,2-dimethoxyethane, 1,2-dibutoxyethane, and the like.

Examples of nitriles include acetonitrile, glutaronitrile, adiponitrile, methoxyacetonitrile, 3-methoxypropionitrile, and the like.

Examples of amides include N,N-dimethylformamide and the like.

Examples of lactams include N-methylpyrrolidinone, N-methyloxazolidinone, N,N'-dimethylimidazolidinone, and the like.

The non-aqueous solvent preferably includes at least one selected from the group consisting of cyclic carbonates, fluorine-containing cyclic carbonates, chain carbonates, and fluorine-containing chain carbonates. The non-aqueous electrolytic solution is more preferably a non-aqueous solvent that includes ethylene carbonate (EC), dimethyl carbonate (DMC), and methyl ethyl carbonate (EMC).

In this case, the total proportion of cyclic carbonates, fluorine-containing cyclic carbonates, chain carbonates, and fluorine-containing chain carbonates in the non-aqueous solvent is preferably from 50% by mass to 100% by mass, more preferably from 60% by mass to 100% by mass, and still more preferably from 80% by mass to 100% by mass.

The non-aqueous solvent preferably includes at least one selected from the group consisting of cyclic carbonates and chain carbonates.

In this case, the total proportion of cyclic carbonates and chain carbonates in the non-aqueous solvent is preferably from 50% by mass to 100% by mass, more preferably from 60% by mass to 100% by mass, and still more preferably from 80% by mass to 100% by mass.

The proportion of the non-aqueous solvent in the non-aqueous electrolytic solution is preferably at least 60% by mass, and more preferably at least 70% by mass.

The upper limit of the proportion of the non-aqueous solvent in the non-aqueous electrolytic solution is, for example, 99% by mass, preferably 97% by mass, and still more preferably 90% by mass, although the upper limit varies with the contents of other components (such as electrolytes).

The intrinsic viscosity of the non-aqueous solvent is preferably 10.0 mPa·s or less at 25°C, from the viewpoint of further improving the dissociability of the electrolyte and ion mobility.

<Electrolyte>

The non-aqueous electrolytic solution preferably includes at least one electrolyte that is a lithium salt including fluorine (hereinafter referred to as a "fluorine-containing lithium salt").

Examples of the fluorine-containing lithium salt include: salts of an inorganic acid anion such as lithium hexafluorophosphate ($LiPF_6$), lithium tetrafluoroborate ($LiBF_4$), lithium hexafluoroarsenate ($LiAsF_6$), and lithium hexafluorotantalate ($LiTaF_6$); and salts of an organic acid anion such as lithium trifluoromethanesulfonate ($LiCF_3SO_3$), lithium bis(fluorosulfonyl)imide ($Li(FSO_2)_2N$), lithium bis(trifluoromethanesulfonyl)imide ($Li(CF_3SO_2)_2N$), and lithium bis(pentafluoroethanesulfonyl)imide ($Li(C_2F_5SO_2)_2N$).

LiPF$_6$ is particularly preferable as a fluorine-containing lithium salt.

The non-aqueous electrolytic solution may include an electrolyte that is a fluorine-free lithium salt. Examples of the fluorine-free lithium salt include lithium perchlorate (LiClO$_4$), lithium tetrachloroaluminate (LiAlCl$_4$), and lithium decachlorodecaborate (Li$_2$B$_{10}$Cl$_{10}$).

The proportion of the fluorine-containing lithium salt relative to the total electrolytes contained in the non-aqueous electrolytic solution is preferably from 50% by mass to 100% by mass, more preferably from 60% by mass to 100% by mass, and still more preferably from 80% by mass to 100% by mass.

The proportion of LiPF$_6$ relative to the total electrolytes contained in the non-aqueous electrolytic solution is preferably from 50% by mass to 100% by mass, more preferably from 60% by mass to 100% by mass, and still more preferably from 80% by mass to 100% by mass.

The concentration of electrolyte in the non-aqueous electrolytic solution is preferably from 0.1 mol/L to 3 mol/L, and more preferably from 0.5 mol/L to 2 mol/L.

The concentration of LiPF$_6$ in the non-aqueous electrolytic solution is preferably from 0.1 mol/L to 3 mol/L, and more preferably from 0.5 mol/L to 2 mol/L.

<Cyclic Carbonate Ester Having Unsaturated Bond>

The non-aqueous electrolytic solution in the lithium secondary battery according to the present disclosure preferably includes at least one cyclic carbonate ester having an unsaturated bond, from the viewpoint of further improving the chemical stability of the non-aqueous electrolytic solution.

Examples of the cyclic carbonate ester having an unsaturated bond include vinylene carbonate-based compounds, vinylethylene carbonate-based compounds, methylene ethylene carbonate-based compounds, and the like.

Examples of vinylene carbonate-based compounds include vinylene carbonate (another name: 1,3-dioxol-2-one), methylvinylene carbonate (another name: 4-methyl-1,3-dioxol-2-one), ethylvinylene carbonate (another name: 4-ethyl-1,3-dioxol-2-one), 4,5-dimethyl-1,3-dioxol-2-one, 4,5-diethyl-1,3-dioxol-2-one, 4-fluoro-1,3-dioxol-2-one, 4-trifluoromethyl-1,3-dioxol-2-one, and the like.

Examples of vinylethylene carbonate-based compounds include vinylethylene carbonate (another name: 4-vinyl-1,3-dioxolane-2-one), 4-methyl-4-vinyl-1,3-dioxolane-2-one, 4-ethyl-4-vinyl-1,3-dioxolane-2-one, 4-(n-propyl)-4-vinyl-1,3-dioxolane-2-one, 5-methyl-4-vinyl-1,3-dioxolan-2-one, 4,4-divinyl-1,3-dioxolane-2-one, 4,5-divinyl-1,3-dioxolan-2-one, and the like.

Examples of methylene ethylene carbonate-based compounds include 4-methylene-1,3-dioxolan-2-one, 4,4-dimethyl-5-methylene-1,3-dioxolan-2-one, 4,4-diethyl-5-methylene-1,3-dioxolan-2-one, and the like.

Vinylene carbonate is particularly preferable as the cyclic carbonate ester having an unsaturated bond.

When the non-aqueous electrolytic solution includes a cyclic carbonate ester having an unsaturated bond, the content of the cyclic carbonate ester having an unsaturated bond is preferably from 0.1% by mass to 5.0% by mass, more preferably from 0.2% by mass to 3.0% by mass, still more preferably from 0.2% by mass to 2.0% by mass, and further more preferably from 0.3% by mass to 1.0% by mass, with respect to the total amount of the non-aqueous electrolytic solution.

When the non-aqueous electrolytic solution includes vinylene carbonate, the content of vinylene carbonate is preferably from 0.1% by mass to 5.0% by mass, more preferably from 0.2% by mass to 3.0% by mass, still more preferably from 0.2% by mass to 2.0% by mass, and further more preferably from 0.3% by mass to 1.0% by mass, with respect to the total amount of the non-aqueous electrolytic solution.

<Method of Producing Non-aqueous Electrolytic Solution>

The method used for producing the non-aqueous electrolytic solution in the lithium secondary battery according to the present disclosure is not particularly limited. The non-aqueous electrolytic solution may be produced by mixing the respective components.

An example of the method used for producing the non-aqueous electrolytic solution is a production method including the steps of:

dissolving an electrolyte in a non-aqueous solvent, to obtain a solution; and
adding, to the obtained solution, at least one of lithium difluorophosphate or lithium monofluorophosphate (and, if necessary, another additive) and performing mixing, to obtain a non-aqueous electrolytic solution.

<Configuration of Battery>

The lithium secondary battery according to the present disclosure may take various known forms, and may be formed in a cylindrical shape, a coin shape, a rectangular shape, a laminate shape, a film shape, or any other shape. However, the basic structure of the cell is the same irrespective of the shape, and design modifications may be applied in accordance with the purpose.

An example of the lithium secondary battery according to the present disclosure is a laminate cell.

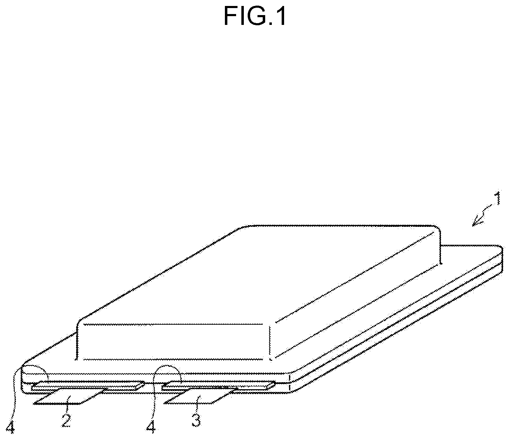

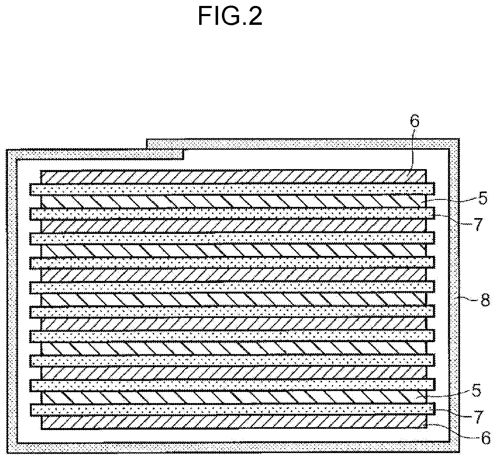

Fig. 1 is a schematic perspective view illustrating an example of a laminate cell that is one example of the lithium secondary battery according to the present disclosure. Fig. 2 is a schematic cross-sectional view in the thickness direction of an electrode stack body housed in the laminate cell illustrated in Fig. 1.

The laminate cell illustrated in Fig. 1 includes a laminate outer case 1 that houses a non-aqueous electrolytic solution (not shown in Fig. 1) and an electrode stack body (not shown in Fig. 1) in the interior of the laminate outer case, and in which the periphery of the laminate outer case is sealed to tightly close the interior of the laminate outer case. A laminate outer case made of aluminum, for example, is used as the laminate outer case 1.

The electrode stack body housed in the laminate outer case 1 includes: a stack composed of positive electrode plates 5 and negative electrode plates 6 that are alternately layered with a separator 7 disposed therebetween; and a separator 8 that encloses the stack, as illustrated in Fig. 2. The positive electrode plates 5, the negative electrode plates 6, the separators 7, and the separator 8 are impregnated with the non-aqueous electrolytic solution according to the present disclosure.

Each of the plural positive electrode plates 5 in the electrode stack body is electrically connected (not shown) to a positive electrode terminal 2 via a positive electrode tab, and a part of the positive electrode terminal 2 protrudes outwardly from the periphery of the laminate outer case 1 (Fig. 1). The portion of the periphery of the laminate outer case 1 at which the positive electrode terminal 2 protrudes is sealed with an electrically insulating seal 4.

In a similar manner, each of the plural negative electrode plates 6 in the electrode stack body is electrically connected (not shown) to a negative electrode terminal 3 via a negative electrode tab, and a part of the negative electrode terminal 3 protrudes outwardly from the periphery of the laminate outer case 1 (Fig. 1). The portion of the periphery of the laminate outer case 1 at which the negative electrode terminal 3 protrudes is sealed with an electrically insulating seal 4.

In the laminate cell according to the foregoing example, the number of the positive electrode plates 5 is five, the number of the negative electrode plates 6 is six, and the positive electrode plates 5 and the negative electrode plates 6 are layered with a separator 7 disposed therebetween, in an arrangement such that the outermost layers at both sides are negative electrode plates 6. However, it is needless to say that the number of the positive electrode plates, the number of the negative electrode plates, and the arrangement in the laminate cell are not limited to those in this particular example, and that various modifications may be made.

Another example of the lithium secondary battery according to the present disclosure is a coin cell.

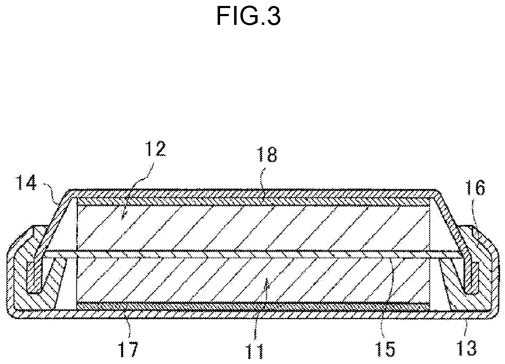

Fig. 3 is a schematic perspective view illustrating one example of a coin cell that is another example of the lithium secondary battery according to the present disclosure.

In the coin cell illustrated in Fig. 3, a disc-shaped negative electrode 12, a separator 15 impregnated with a non-aqueous electrolytic solution, a disc-shaped positive electrode 11, and, optionally, spacer plates 17 and 18 made of stainless steel, aluminum or the like, are layered in this order, and are housed between a positive electrode can 13 (hereinafter also referred to as a "cell can") and a seal plate 14 (hereinafter also referred to as a "cell cap") in this state. The positive cell can 13 and the seal plate 14 are subjected to sealing by seaming with a gasket 16 disposed therebetween.

In this example, a non-aqueous electrolytic solution that includes at least one of lithium difluorophosphate or lithium monofluorophosphate is used as the non-aqueous electrolytic solution to be supplied to the separator 15.

The lithium secondary battery according to the present disclosure may be a lithium secondary battery obtained by charging and discharging a lithium secondary battery (that is a lithium secondary battery prior to charging and discharging).

In other words, the lithium secondary battery according to the present disclosure may be a lithium secondary battery (lithium secondary battery that has experienced charging and discharging) prepared by: preparing a lithium secondary battery that has not experienced charging and discharging; and then subjecting the lithium secondary battery (that has not experienced charging and discharging) to at least one cycle of charging and discharging.

The application of the lithium secondary battery according to the present disclosure is not particularly limited, and the lithium secondary battery may be used in various known applications. For example, the lithium secondary battery can be widely used in both of small-sized portable devices and large-sized machines, such as laptop personal computers, mobile personal computers, cell phones, headphone stereo devices, video cameras, liquid crystal televisions, handy cleaners, electronic organizers, electronic calculators, radios, backup power source applications, motors, automobiles, electric vehicles, motorcycles, electric motorcycles, bicycles, electric bicycles, lightening devices, game machines, clocks/watches, electric power tools, and cameras.

As described above, the lithium secondary battery according to the present disclosure preferably has a high charged voltage at full charge (for example, 3.5V or higher). In a case in which the charged voltage at full charge is high, an effect produced by specifying the weight average molecular weight of the polyvinylidene fluoride in the positive electrode to a weight average molecular weight of from 300,000 to 950,000 (i.e., an effect in terms of reducing the cell resistance after storage) is more effectively produced.

The charged voltage at full charge of the lithium secondary battery according to the present disclosure is preferably at least 3.5V, more preferably at least 3.7V, still more preferably at least 4.0V, and further more preferably at least 4.0V.

The upper limit of the charged voltage at full charge of the lithium secondary battery according to the present disclosure is preferably 5.0V, more preferably 4.8V, still more preferably 4.6V, and further more preferably 4.2V.

EXAMPLES

Examples according to the present disclosure are described below, but the present disclosure is not limited by the examples provided below.

In the following examples, the "addition amount" means a content with respect to the total amount of the finally obtained non-aqueous electrolytic solution, and "wt%" means % by mass.

[Example 1]

A coin lithium secondary battery having the configuration as shown in Fig. 3 (hereinafter also referred to as a "coin cell") was produced through the following procedures.

<Preparation of Negative Electrode>

Amorphous-coated natural graphite (97 parts by mass), carboxymethylcellulose (1 part by mass), and SBR latex (2 parts by mass) were kneaded in water solvent, to prepare a negative electrode mix slurry in a paste state.

Next, the negative electrode mix slurry was applied to a 10 $\mu$m-thick negative electrode current collector made of a belt-shaped copper foil and dried, and then compressed by a roll press, thereby obtaining a sheet-shaped negative electrode composed of a negative electrode current collector and a negative electrode active material layer. The coating density of the negative electrode active material layer was 10 mg/cm$^2$, and the bulk density was 1.5 g/ml.

<Preparation of Positive Electrode>

LiNi$_{0.5}$Mn$_{0.3}$Co$_{0.2}$O$_2$ (90 parts by mass), acetylene black (5 parts by mass), and PVDF having a weight average molecular weight of 815,000 (5 parts by mass) were kneaded in N-methylpyrrolidinone solvent, to prepare a positive electrode mix slurry in a paste state.

The positive electrode mix slurry was applied to a 20 $\mu$m-thick positive electrode current collector made of a belt-shaped aluminum foil and dried, and then compressed by a roll press, thereby obtaining a sheet-shaped positive electrode composed of a positive electrode current collector and a positive electrode active material layer. The coating density of the positive electrode active material layer was 16 mg/cm$^2$, and the bulk density was 2.5 g/ml.

<Preparation of Non-aqueous Electrolytic Solution>

As a non-aqueous solvent, ethylene carbonate (EC), dimethyl carbonate (DMC), and methyl ethyl carbonate (EMC) were mixed in a ratio of 30:35:35 (volume ratio) to obtain a mixed solvent.

An electrolyte LiPF$_6$ was dissolved in the obtained mixed solvent such that the electrolyte concentration of LiPF$_6$ in the final non-aqueous electrolytic solution to be prepared would become 1.2 mol/L.

In the resultant solution, lithium difluorophosphate (also referred to as "LiDFP") was dissolved in an amount of 1.0% by mass with respect to the total amount of the non-aqueous electrolytic solution, thereby obtaining the non-aqueous electrolytic solution.

<Preparation of Non-aqueous Electrolytic Solution as Control>

In addition, a non-aqueous electrolytic solution as a control (hereinafter also referred to as "control non-aqueous electrolytic solution") was obtained in the same manner as that in the preparation of the above-described non-aqueous electrolytic solution, except that LiDFP was not included.

<Production of Coin Cell>

The foregoing negative electrode and positive electrode were stamped in disc shapes having a diameter of 14 mm and 13 mm, respectively, to obtain a coin-shaped negative electrode and a coin-shaped positive electrode. Then,

a 20-$\mu$m thick microporous polyethylene film was stamped in a disc shape having a diameter of 17 mm, to obtain a separator.

The coin-shaped negative electrode, the separator, and the coin-shaped positive electrode obtained were layered in this order in a stainless-steel cell can (2032 size), and then 20 $\mu$L of the above-described non-aqueous electrolytic solution were injected into the cell can, thereby causing the separator, the positive electrode, and the negative electrode to be impregnated with the non-aqueous electrolytic solution.

Then, an aluminum plate (thickness: 1.2 mm, diameter: 16 mm) and a spring were placed on the positive electrode, and this cell can cap and the cell can were seamed with a polypropylene gasket disposed therebetween, to seal the cell.

In this manner, a coin cell (specifically, a coin-shaped lithium secondary battery) having a diameter of 20 mm and a height of 3.2 mm and having a configuration as illustrated in Fig. 3 was obtained.

<Production of Coin Cell as Control>

Further, a coin cell as a control (hereinafter also referred to as "control cell") was obtained in the same manner as that in the preparation of the above-described coin cell, except that the above-described control non-aqueous electrolytic solution (i.e., a non-aqueous electrolytic solution not containing LiDFP) was used in place of the above-described non-aqueous electrolytic solution.

<Evaluation of Cell Resistance After Storage at High Temperature>

The coin cell and control cell obtained were each made to undergo three charge-discharge cycles at a constant voltage of 4.2V, and charged to a state of charge (SOC) 100% and a voltage of 4.2V.

The charged voltage (4.2V) is the charged voltage at full charge of the cell.

Thereafter, the coin cell and the control cell were stored in a 60 °C environment for 9 days. A direct-current resistance was determined according to the following method after 9 days of storage, and recorded as a direct-current resistance of the cell after 9 days of storage.

(Determination of Direct-Current Resistance)

The coin cell and the control cell were each conditioned to SOC 50%, and then allowed to discharge at a constant current of 0.2 mA at 25 °C. The direct-current resistance [$\Omega$] of each of the coin cell and the control cell were determined by measuring a voltage decrease during 10 seconds from the start of the discharge.

Then, a relative value of the direct-current resistance of the coin cell after 9 days of storage was obtained, assuming that the direct-current resistance of the control cell after 9 days of storage was 100. The results are indicated in Table 1.

[Examples 2 and 3 and Comparative Examples 1 and 2]

Coin cells and control cells were produced in the same manner as that in Example 1 except that the PVDF contained in the positive electrode was replaced by PVDFs having the weight average molecular weights indicated in Table 1, and evaluation was performed in the same manner as that in Example 1. The results are indicated in Table 1.

Table 1

| | Positive Electrode | | | Direct-current Resistance of the Cell After 9 Days of Storage (Relative Value; %) | |
|---|---|---|---|---|---|
| | Binder (Type) | Binder (Addition Amount; wt%) | Weight Average Molecular Weight | Control Cell (LiDFP is not included in the non-aqueous electrolytic solution) | Coin Cell (LiDFP is included in the non-aqueous electrolytic solution) |
| Comparative Example 1 | PVDF | 5 | 1,000,000 | 100 | 119 |
| Example 1 | PVDF | 5 | 815,000 | 100 | 97 |
| Example 2 | PVDF | 5 | 630,000 | 100 | 96 |
| Example 3 | PVDF | 5 | 455,000 | 100 | 92 |

(continued)

| | Positive Electrode | | | Direct-current Resistance of the Cell After 9 Days of Storage (Relative Value; %) | |
|---|---|---|---|---|---|
| | Binder (Type) | Binder (Addition Amount; wt%) | Weight Average Molecular Weight | Control Cell (LiDFP is not included in the non-aqueous electrolytic solution) | Coin Cell (LiDFP is included in the non-aqueous electrolytic solution) |
| Comparative Example 2 | PVDF | 5 | 280,000 | 100 | 100 |

As demonstrated in Table 1, it can be seen that inclusion of LiDFP in the non-aqueous electrolytic solution provides an effect in terms of reduction of cell resistance after storage in cases in which the weight average molecular weight of the PVDF contained in the positive electrode is from 300,000 to 950,000 (i.e., in the cases of Examples 1 to 3).

In contrast, in cases in which the weight average molecular weight of the PVDF contained in the positive electrode was more than 950,000, the foregoing effect was not obtained even when the non-aqueous electrolytic solution included LiDFP, and the cell resistance after storage increased, rather than decreased. Similarly, in cases in which the weight average molecular weight of the PVDF contained in the positive electrode was less than 300,000, the foregoing effect was not obtained even when the non-aqueous electrolytic solution included LiDFP.

The disclosure of Japanese Patent Application No. 2020-054998, filed March 25, 2020, was incorporated herein by reference in its entirety.

All publications, patent applications, and technical standards mentioned in this specification are herein incorporated by reference to the same extent as if each individual publication, patent application, or technical standard was specifically and individually indicated to be incorporated by reference.

## Claims

1.   A lithium secondary battery, comprising:

a positive electrode that includes a positive electrode active material including a compound represented by the following Formula (X) and a binder including a polyvinylidene fluoride having a weight average molecular weight of from 300,000 to 950,000;
a negative electrode; and
a non-aqueous electrolytic solution that includes at least one of lithium difluorophosphate or lithium monofluorophosphate:

$$LiNi_aMn_bCo_cO_2 \cdots \qquad (X)$$

wherein, in Formula (X), each of a, b, and c is independently more than 0 but less than 1.00, and a sum of a, b, and c is from 0.99 to 1.00.

2.   The lithium secondary battery according to claim 1, wherein a total content of the lithium difluorophosphate and the lithium monofluorophosphate is from 0.01% by mass to 5% by mass with respect to a total amount of the non-aqueous electrolytic solution.

3.   The lithium secondary battery according to claim 1 or claim 2, wherein the positive electrode includes a positive electrode current collector and a positive electrode mix layer that includes the positive electrode active material and the binder, and a content of the polyvinylidene fluoride is from 0.01% by mass to 10% by mass with respect to a total amount of the positive electrode mix layer.

4.   The lithium secondary battery according to any one of claims 1 to 3, wherein the negative electrode includes a negative electrode active material that includes a graphite material.

5.   The lithium secondary battery according to any one of claims 1 to 4, wherein the non-aqueous electrolytic solution includes: a non-aqueous solvent that includes ethylene carbonate (EC), dimethyl carbonate (DMC), and ethyl methyl carbonate (EMC); and an electrolyte that includes a fluorine-containing lithium salt.

6.  The lithium secondary battery according to claim 5, wherein a charged voltage at full charge is 3.5V or more.

FIG.1

FIG.2

FIG.3

**EP 4 131 469 A1**

<table>
<tr><td colspan="2">**INTERNATIONAL SEARCH REPORT**</td><td>International application No.<br><br>PCT/JP2021/011260</td></tr>
</table>

**A. CLASSIFICATION OF SUBJECT MATTER**

H01M 4/131(2010.01)i; H01M 4/505(2010.01)i; H01M 4/525(2010.01)i; H01M 4/587(2010.01)i; H01M 4/62(2006.01)i; H01M 10/052(2010.01)i; H01M 10/0567(2010.01)i; H01M 10/0569(2010.01)i

FI: H01M10/052; H01M4/131; H01M10/0567; H01M4/505; H01M4/525; H01M4/62 Z; H01M4/587; H01M10/0569

According to International Patent Classification (IPC) or to both national classification and IPC

**B. FIELDS SEARCHED**

Minimum documentation searched (classification system followed by classification symbols)

H01M4/131; H01M4/505; H01M4/525; H01M4/587; H01M4/62; H01M10/052; H01M10/0567; H01M10/0569

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2017/217408 A1 (NEC CORP.) 21 December 2017 (2017-12-21) paragraphs [0044]-[0061], example 1 | 1-6 |
| Y | JP 2014-78360 A (TOYOTA MOTOR CORP.) 01 May 2014 (2014-05-01) paragraphs [0067]-[0082], example 6 | 1-6 |
| Y | JP 2014-7132 A (TOYOTA MOTOR CORP.) 16 January 2014 (2014-01-16) paragraphs [0043]-[0056], sample A | 1-6 |
| Y | JP 4354214 B2 (PANASONIC CORP.) 28 October 2009 (2009-10-28) paragraphs [0002]-[0009], [0015], [0019], [0029]-[0035], example 1 | 1-6 |
| A | JP 11-67270 A (SANYO ELECTRIC CO., LTD.) 09 March 1999 (1999-03-09) | 1-6 |
| A | JP 2007-180025 A (MITSUBISHI CHEMICAL CORP.) 12 July 2007 (2007-07-12) | 1-6 |

☒ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 May 2021 (28.05.2021) | 08 June 2021 (08.06.2021) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

| International application No. |
|---|
| PCT/JP2021/011260 |

C (Continuation).  DOCUMENTS CONSIDERED TO BE RELEVANT

| Category* | Citation of document, with indication, where appropriate, of the relevant passages | Relevant to claim No. |
|---|---|---|
| A | WO 2017/022615 A1 (HITACHI CHEMICAL CO., LTD.) 09 February 2017 (2017-02-09) | 1-6 |
| A | WO 2016/123168 A1 (CORNING INCORPORATED) 04 August 2016 (2016-08-04) | 1-6 |

Form PCT/ISA/210 (continuation of second sheet) (January 2015)

**INTERNATIONAL SEARCH REPORT**
Information on patent family members

| International application no. |
|---|
| PCT/JP2021/011260 |

| Patent Documents referred in the Report | Publication Date | Patent Family | Publication Date |
|---|---|---|---|
| WO 2017/217408 A1 | 21 Dec. 2017 | (Family: none) | |
| JP 2014-78360 A | 01 May 2014 | US 2014/0099555 A1 paragraphs [0073]-[0095], example 6 CN 103715451 A | |
| JP 2014-7132 A | 16 Jan. 2014 | (Family: none) | |
| JP 4354214 B2 | 28 Oct. 2009 | (Family: none) | |
| JP 11-67270 A | 09 Mar. 1999 | (Family: none) | |
| JP 2007-180025 A | 12 Jul. 2007 | US 2010/0015514 A1 WO 2007/055087 A1 EP 1939971 A1 KR 10-2008-0056226 A CN 101292389 A | |
| WO 2017/022615 A1 | 09 Feb. 2017 | US 2018/0226678 A1 EP 3333961 A1 KR 10-2018-0031739 A CN 108140886 A | |
| WO 2016/123168 A1 | 04 Aug. 2016 | US 2016/0314908 A1 CN 107210138 A KR 10-2017-0109028 A JP 2018-507550 A | |

Form PCT/ISA/210 (patent family annex) (January 2015)

**EP 4 131 469 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017154908 A
- JP 2020054998 A